Europäisches Patentamt

European Patent Office

Office européen des brevets

(19)

(11) Numéro de publication : **0 470 009 A1**

# (12) DEMANDE DE BREVET EUROPEEN

(21) Numéro de dépôt : **91420230.4**

(22) Date de dépôt : **05.07.91**

(51) Int. Cl.$^5$ : **F17C 11/00**, F23Q 2/16

(30) Priorité : **30.07.90 FR 9010219**

(43) Date de publication de la demande :
**05.02.92 Bulletin 92/06**

(84) Etats contractants désignés :
**AT BE CH DE ES FR GB GR IT LI LU NL SE**

(71) Demandeur : **CRICKET**
**105, avenue du 8-Mai-1945**
**F-69142 Rillieux-la-Pape (FR)**

(72) Inventeur : **Frigiere, René**
**47 Avenue Bergeron**
**F-69260 Charbonnières Les Bains (FR)**

(74) Mandataire : **Maureau, Philippe et al**
**Cabinet Germain & Maureau Le Britannia -**
**Tour C 20, bld Eugène Déruelle**
**F-69003 Lyon (FR)**

(54) **Moyens de stockage, en phase liquide, d'un combustible normalement gazeux.**

(57)    Ces moyens sont du type constitués par une enceinte (3), pourvue d'un orifice (5), formant réservoir, intégrée dans le corps de l'appareil destiné à consommer ce gaz ou formée dans une cartouche (2) amovible et adaptable à cet appareil, cette enceinte (3) qui est pourvue d'un organe (8,8a,8b) d'ouverture et fermeture de cet orifice (5), contenant un corps adsorbant (4) à l'égard des hydrocarbures.

D'une part, l'enceinte (3) est pourvue d'un réducteur de pression (6,6a,6b) situé en amont de son orifice (5), et d'autre part, le corps adsorbant contenu dans l'enceinte (3) est un corps pulvérulent appatenant à la famille des corps à grande surface spécifique, c'est-à-dire supérieure à 200 m$^2$/g, combinée à une grande porosité, c'est-à-dire à 80 %.

FIG.3

EP 0 470 009 A1

La présente invention concerne des moyens de stockage, en phase liquide, d'un combustible normalement gazeux.

De nombreux appareils tels que briquets, réchauds, radiateurs, fers-à-friser et autres similaires, utilisent la combustion d'un combustible normalement gazeux stocké en phase liquide dans une enceinte formant réservoir, cette enceinte étant soit ménagée dans le corps de l'appareil dans lequel elle est intégrée, lorsque cet appareil est du type jetable, comme cela est souvent le cas pour les briquets, soit ménagée dans une pièce indépendante, adaptable et amovible, constituant une cartouche interchangeable.

Les réservoirs ou cartouches atuellement commercialisés contiennent un gaz de pétrole liquéfié sous pression, à l'état libre, et sont équipés d'un système d'évaporation et de détente pour la libération du combustible sous forme gazeuse, à sa pression d'utilisation et avec le débit recherché. Naturellement, ces systèmes d'évaporation et de détente augmentent considérablement le prix de revient des réservoirs ou des cartouches.

Par le document FR-A-897 877, on connaît un procédé de stockage et d'utilisation d'un gaz liquéfié au moyen d'un support adsorbant convenablement choisi et qui produirait immédiatement la détente jusqu'à une pression très voisine de la pression d'utilisation. Ce procédé devrait supprimer la nécessité de l'emploi de détendeurs, un simple conduit de faible section combiné à un robinet ou valve d'obturation devant suffire pour la commande de la distribution du gaz détendu. En pratique ce procédé semble n'avoir jamais été réalisé pour des appareils consommant un combustible uniquement en phase gazeuse à partir de la phase liquide stockée dans le réservoir, dans un support adsorbant, sans utilisation d'aucun organe auxiliaire contrôlant le débit. Pour une production de masse de produits devant assurer un débit de gaz relativement précis, cette solution est irréalisable.

Il faut noter, en outre, que le stockage d'un gaz de pétrole liquéfié dans les matières adsorbantes citées dans ce brevet, c'est-à-dire le coton, la tourbe, le feutre, le charbon, la terre d'infusoires, les silicates, les mousses métalliques, les matières cellulosiques et leurs dérivés et les sels métalliques, ou dans tout autre type de matière adsorbante connu à ce jour, n'a jamais fait baisser la pression de stockage comme indiqué par l'inventeur. Tout au plus, du fait des rayons de courbure des ménisques de condensât à l'intérieur d'une matière à très faible dimension de pores, la tension de vapeur du gaz condensable peut être inférieure de quelques pourcents, de par la loi de Kelvin basée sur l'équilibre mécanique d'un interface liquide-vapeur donné par la loi de Laplace. En conséquence aucun avantage n'est à attendre au niveau des caractéristiques mécaniques du réservoir.

Par le document FR-B-73 36495, il est proposé, pour le stockage d'un gaz de pétrole liquéfié, une substance adsorbante permettant de combiner la rétention du liquide par adsorption capillaire et sa libération, sous forme gazeuse, directement à la pression d'utilisation, sans utiliser de moyens intermédiaires de régulation et de détente. Pour une production de masse de produits devant assurer un débit de gaz relativement précis, il est, là aussi, difficile de contrôler cette régulation sans crachements ou crachotements dus à la présence de gouttelettes de liquide, quelle que soit la position du réservoir et quel que soit le débit de combustible gazeux désiré. De plus, les forces de rétention du liquide doivent être suffisamment élevées pour pouvoir libérer le combustible à l'état gazeux, avec le débit recherché, généralement faible, (de l'ordre de quelques grammes par heure) sans utiliser de moyens d'expansion ou de régulation.

En outre, le corps adsorbant choisi est soit fibreux, soit de type mousse à cellules ouvertes, comme les mousses de polyuréthane ou de polyisoprène. Dans les deux cas, il s'agit de produits délicats à manipuler pour leur insertion dans le réservoir, d'autant que le taux de compression de ces corps adsorbants est d'une grande importance pour la rétention du combustible et donc pour le bon fonctionnement du produit. De plus, le volume de butane adsorbé est relativement faible et varie de 53 % à 80 % du volume disponible, pour un tassement optimum de l'adsorbant équivalent à un pourcentage élevé de matière adsorbante qui varie de 15 % à 34 % de volume d'adsorbant par rapport au volume du réservoir.

Il existe également des réservoirs de gaz de pétrole liquéfié utilisant des matières fibreuses permettant un certain degré de rétention par capillarité mais ces systèmes sont incapables d'assurer une rétention totale du liquide et des moyens mécaniques annexes sont nécessaires pour assurer une régulation du débit tout en évitant les phénomènes de crachotement.

Par le document DE-A-2.039.370, on connait un dispositif pour produire un courant de gaz sous pression comprenant une enceinte, isolée de façon étanche à l'air, équipée d'une soupape d'échappement, contenant un gaz liquéfié sous pression, réparti sur un support pulvérulent adsorbant ou absorbant, dans lequel le support est contenu dans une poche qui est imperméable pour le support ainsi que pour l'adsorbat formé par le support et le gaz liquéfié mais qui est, cependant, perméable à la phase gazeuse dégagée par vaporisation du gaz liquéfié et qui est logée dans l'enceinte étanche de l'air.

Dans ce dispositif, la poche spéciale contenant le produit adsobant pulvérulent est présentée comme ayant un rôle d'élément filtrant, assurant la retenue non seulement des grains de poudre que forme l'adsorbat lors de l'évaporation du gaz liquéfié au moment de l'utilisation du dispositif, mais aussi des grains du support adsor-

2

bant pulvérulent avant son introduction dans l'enceinte étanche à l'air du dispositif.

Si le second rôle de cette poche est bien réel, quelle que soit l'application du dispositif, son premier rôle n'est envisageable que pour certaines applications et, notamment, il est envisageable pour une application à un dispositif allumeur ou brûleur de gaz, c'est-à-dire dans le cas où le gaz liquéfié est un combustible. En effet, dans une telle application, il est indispensable, pour que la flamme soit stable, que le débit de combustible en phase gazeuse soit constant.

Or, non seulement la porosité de la poche est indéterminée, il est même prévu qu'elle puisse se déchirer, mais, en outre, la surface utile est aussi indéterminée. Cette poche ne peut donc, en aucun cas, jouer le rôle du réducteur de pression indispensable pour une telle application.

La présente invention concerne des moyens de stockage, en phase liquide, d'un combustible normalement gazeux, qui soit, à la fois, d'un coût moins élevé, et d'un fonctionnement plus fiable que ceux actuellement connus.

A cet effet, dans les moyens de stockage qu'elle concerne et qui sont du dernier type cité, d'une part, l'enceinte est pourvue d'un réducteur de pression et d'autre part, le corps adsorbant qu'elle soutient est un corps pulvérulent appartenant à la famille des corps à grande surface spécifique, c'est-à-dire supérieure à 100 m$^2$/g, combinée à une grande porosité, c'est-à-dire de l'ordre de à 80 % ou supérieure.

Les corps à grande surface spécifique peuvent être classés en trois catégories :

1. Les corps à grande surface spécifique extérieure, provenant d'un degré élevé de division, qui se traduit par l'action d'un grand nombre de forces interfaciales ; ces corps sont représentés par exemple par la suie ;

2. Les corps à grande surface spécifique intérieure, venant de leur fragmentation intérieure et de leur structure capillaire ; les forces qui agissent sont les mêmes que celles qui sont actives à la surface extérieure des corps de la classe précédente ; ces corps sont représentés, par exemple, par les charbons actifs, les gels de l'acide salicilique et les oxydes métalliques ;

3. Les corps à structure poreuse, qui ont une certaine surface intérieure et, le cas échéant, la faculté de gonfler dans les solvants, c'est-à-dire d'élargir leur structure et d'augmenter leur surface intérieure. A la différence des corps des deux premières catégories mentionnées ci-dessus, ces corps possèdent non seulement des forces interfaciales mais aussi le pouvoir de détacher et de s'attacher des ions ; ils sont représentés, par exemple, par les échangeurs d'ions naturels et synthétiques.

En dehors des corps appartenant à ces trois grandes catégories, il existe des corps dits intermédiaires que l'on peut situer entre la première et la deuxième catégorie, comme les terres décolorantes, et les corps que l'on peut situer entre la deuxième et la troisième catégorie, comme les charbons acides.

Suivant une forme d'exécution préférée de l'invention, le corps adsorbant pulvérulent contenu dans l'enceinte de stockage de gaz liquéfié est constitué par un produit qui présente à la fois une grande surface spécifique extérieure, une grande surface spécifique intérieure, une structure poreuse, exceptionnellement grande, une structure granulométrique très fine et une composition chimique présentant une bonne compatibilité avec le combustible à stocker afin de bénéficier, en plus des phénomènes d'adsorption physique et de condensation capillaire, des phénomènes d'adsorption chimique ou chimiosorption pour la rétention du combustible liquide, avec une structure géométrique interne autorisant une utilisation optimale de l'espace inter-granulaire pour les phénomènes d'adsorption et de condensation capillaire.

Un corps adsorbant convenant parfaitement à cette application est un silicate de calcium.

Suivant une première forme d'exécution de l'invention, ce silicate de calcium est obtenu à partir de diatomite ou terre diatomée ou diatomacée ou terre d'infusoires ou kieselgur, qui sont des squelettes siliceux sédimentaires se trouvant en grande quantité sur toute la terre, dans les couches jurasiques et du crétacé supérieur.

Suivant une variante d'exécution de l'invention, le silicate de calcium est obtenu à partir de rhiolite, roches volcaniques vitreuses qui, après expansion due à la présence d'eau, par calcination et broyage, donne une matière appelée perlite expansée.

De préférence, ce corps pulvérulent reçoit, en autoclave, sous une pression de 5 à 6 bar, à une température de l'ordre de 160° C et pendant environ 20 minutes, un traitement en présence de chaux afin d'optimiser son activité superficielle. Ce corps possède alors un bon compromis entre les caractéristiques de surface spécifique, de porosité, de granulométrie, de composition chimique tout en étant relativement bon marché de par sa disponibilité sur la surface de la terre et de par la relative simplicité de son procédé d'élaboration.

En outre, son caractère pulvérulent ou granuleux facilite les opérations de dosage et remplissage des enceintes de stockage du combustible en phase liquide.

Ce corps adsorbant présente une grande surface spécifique naturelle intérieure et extérieure, de l'ordre de 100 m$^2$/g, une porosité intérieure très grande, de l'ordre de 80 à 96 % et une granulométrie telle que 95 % en poids de cette terre possède une granulométrie inférieure à 30 microns tandis que 66 % en poids possèdent une granulométrie comprise entre 20 et 30 microns.

Dans ces conditions, le rayon équivalent de perméamétrie est suffisamment petit, inférieur à 100 Å, pour augmenter les phénomènes de condensation capillaire.

Suivant encore une autre caratéristique avantageuse de l'invention, le corps adsorbant pulvérulent est tassé pour augmenter les phénomènes de condensation capillaire. On peut ainsi obtenir un rayon équivalent de perméamétrie inférieur à 100 Å de telle sorte que la densité de ce corps varie de 0,08 à l'état non tassé à 0,25 à l'état tassé.

Le tassement ou taux de compression du corps adsorbant pulvérulent est un facteur important qui permet d'augmenter la quantité de combustible stocké par adsorption et condensation capillaire. En effet, grâce à la forme relativement ouverte des grains constituant cet adsorbant pulvérulent, leur enchevêtrement par tassement augmente la surface spécifique interne, ce qui augmente les zones opérationnelles pour l'adsorption physique et le nombre de sites opérationnels pour la condensation capillaire.

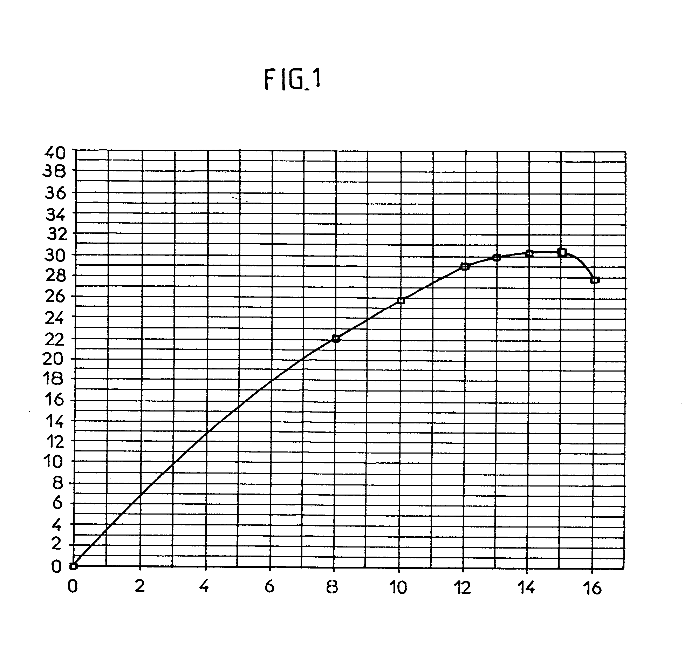

La figure 1 montre, par une courbe, la variation de la masse de combustible en fonction de la masse du corps adsorbant dans un volume de réservoir constant, le combustible étant, dans cet exemple, de l' isobutane.

La figure 2 du dessin annexé qui représente la courbe de la densité du corps adsorbant pulvérulent, exprimée en $g/cm^3$, par rapport à la quantité de combustible stocké, exprimée en grammes. L'examen de cette courbe montre bien que la quantité de combustible stocké augmente avec la densité du corps adsorbant pulvérulent, jusqu'à une certaine valeur au-delà de laquelle cette quantité diminue, la raison en étant que la diminution des espaces intergranulaires l'emporte sur la diminution du volume apparent.

Dans l'exemple illustré sur le dessin, la quantité de combustible stockée atteint sa valeur maximale pour une densité du corps adsorbant pulvérulent comprise entre 0,20 et 0,22.

La figure 3 montre, vue en coupe axiale, une cartouche conforme à l'invention.

A l'intérieur du corps cylindrique 2 de cette cartouche, est ménagée une enceinte 3 destinée à recevoir le corps adsorbant pulvérulent 4 qui est, de préférence, tassé jusqu'à une densité de l'ordre de 0,21 et qui, dans cet exemple, est constituée par une poudre fine blanche et sans odeur de silicate de calcium.

Lorsque cette poudre n'est pas tassée, sa densité est de l'ordre de 0,08 et son poids par $m^3$ est alors de l'ordre de 80 kg. Lorsqu'elle est tassée jusqu'à une densité de l'ordre de 0,15, son poids par $m^3$ est de l'ordre de 150 kg.

Sa composition, en pourcentage en poids, est la suivante:

| | |
|---|---|
| $SiO_2$ | 63 % |
| $CaO$ | 21 % |
| $Fe_2O_3$ | 1 % |
| $Al_2O_3$ | 8 % |
| $MgO$ | 0,5 % |
| $Ma_2O + K_2O$ | 6 % |

La taille ultime des particules calculée à partir d'analyse de mesures photographiques aux rayons X est de l'ordre de 0.02 à 0.07 microns. Cependant, ces fines particules élémentaires sont agglomérées entre elles et l'analyse granulométrique de ces agrégats a donné les résultats suivants, exprimés en pourcents, en poids :

| | |
|---|---|
| rayon supérieur à 100 µm ......................... | 3 % |
| rayon compris entre 100 et 50 µm............. | 2 % |
| rayon compris entre 50 et 30 µm.............. | 3 % |
| rayon compris entre 30 et 20 µm.............. | 66 % |
| rayon compris entre 20 et 10 µm .......... | 13 % |
| rayon inférieur à 10 µm ....................... | 13 % |

La porosité de ce corps pulvérulent a été calculée à environ 80 %.

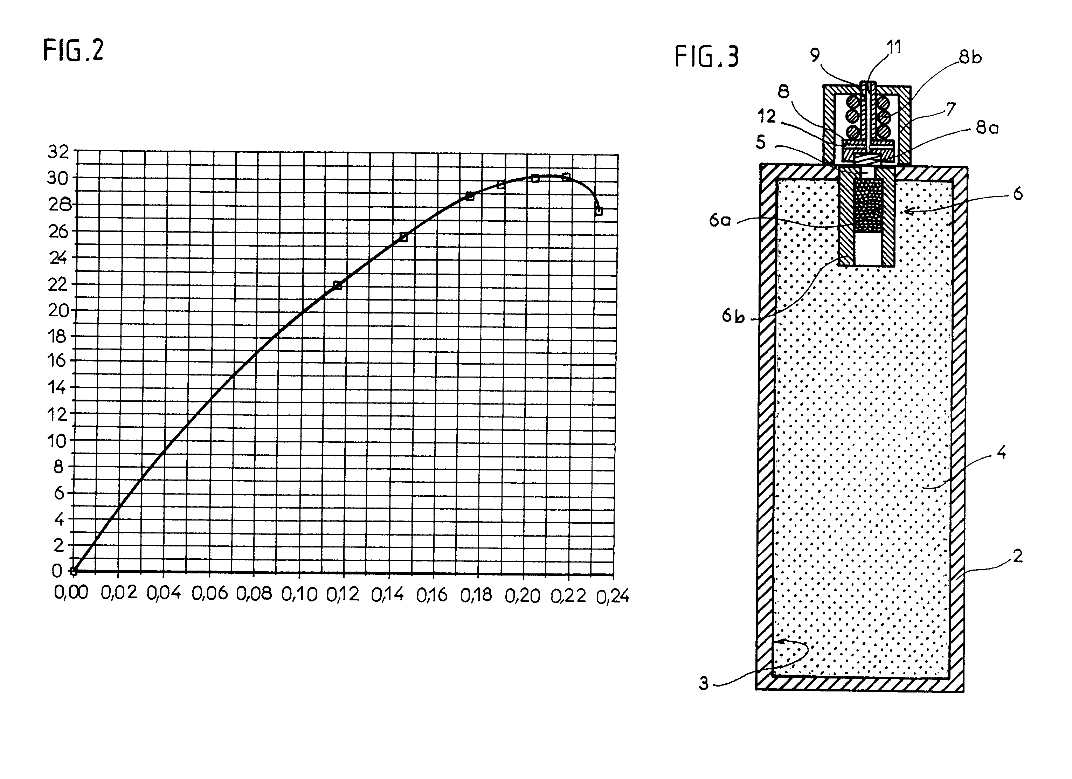

Comme le montre la figure 2, cette cartouche présente un orifice axial de sortie 5 en amont duquel est disposé un réducteur de pression 6 constitué par une masse poreuse 6a contenue dans un manchon cylindrique 6b fixé au corps 2 de la cartouche, axialement à son orifice de sortie 5, à l'intérieur de l'enceinte 3.

Le réducteur de pression 6 peut être prévu pour abaisser la pression du gaz à sa valeur d'utilisation ou, notamment si l'enceinte est aménagée dans une cartouche amovible, à une pression supérieure à celle d'utilisation par l'appareil auquel est destinée cette cartouche, l'appareil en question étant lui-même équipé d'un réducteur de pression complémentaire.

Cette disposition présente l'avantage de permettre l'utilisation d'une même cartouche avec des appareils fonctionnant à des pressions de gaz différentes ; il suffit pour cela que d'une part, le réducteur de pression soit calculé pour abaisser la pression de gaz à une valeur au plus égale à celle de l'appareil fonctionnant à la pression de gaz la plus élevée, chaque appareil étant lui-même équipé, si nécessaire, d'un réducteur de pression complémentaire abaissant la pression du gaz obtenue par le réducteur de pression de la cartouche à une valeur inférieure correspondant à celle de fonctionnement de cet appareil.

Coaxialement à son orifice de sortie 5, le corps 2 de cette cartouche porte, recouvert par un carter de protection 7, un clapet de fermeture 8 équipé de son joint d'étanchéité 8a et de son ressort de rappel 8b. La tige de manoeuvre 9 du clapet 8 est tubulaire de manière à présenter un canal 11 de sortie du gaz communiquant, avec l'intérieur du carter 7, par des orifices 12.

La tige tubulaire 9 de manoeuvre du clapet 8 est destinée à être reliée, de manière connue en soi, soit à un tube prolongeant le canal 11 jusqu'au brûleur de l'appareil auquel cette cartouche est destinée, soit directement à ce brûleur.

## Revendications

1. Moyens de stockage, en phase liquide, d'un combustible normalement gazeux, du type constitués par une enceinte (3), pourvue d'un orifice (5), formant réservoir, intégrée dans le corps de l'appareil destiné à consommer ce gaz ou formée dans une cartouche (2) amovible et adaptable à cet appareil, cette enceinte (3), qui est pourvue d'un organe (8, 8a, 8b) d'ouverture et fermeture de cet orifice (5), contenant un corps adsorbant (4) à l'égard des hydrocarbures, caractérisés en ce que d'une part, l'enceinte (3) est pourvue d'un réducteur de pression (6,6a,6b) situé en amont de son orifice de sortie (5) et, d'autre part, le corps adsorbant contenu dans l'enceinte (3) est un corps pulvérulent appartenant à la famille des corps à grande surface spécifique, c'est-à-dire supérieure à 100 m²/g, combinée à une grande porosité, c'est-à-dire de l'ordre de 80 % ou supérieure.

2. Moyens selon la revendication 1, caractérisée en ce que le corps adsorbant pulvérulent (4) contenu dans l'enceinte (3) de stockage de gaz liquéfié est constitué par un produit qui présente à la fois une grande surface spécifique extérieure, une grande surface spécifique intérieure, une structure poreuse, exceptionnellement grande, une structure granulométrique très fine et une composition chimique présentant une bonne compatibilité avec le combustible à stocker afin de bénéficier, en plus des phénomènes d'adsorption physique et de condensation capillaire, des phénomènes d'adsorption chimique ou chimisorption pour la rétention du combustible liquide, avec une structure géométrique interne autorisant une utilisation optimale de l'espace inter-granulaire pour les phénomènes d'adsorption et de condensation capillaire.

3. Moyens selon la revendication 2, caractérisés en ce que le corps adsorbant pulvérulent (4) est un silicate de calcium.

4. Moyens selon la revendication 3, caractérisés en ce que le silicate de calcium est obtenu à partir de diatomite ou terre diatomée ou diatomacée ou terre d'infusoires ou kieselgur, qui sont des squelettes silicieux sédimentaires se trouvant en grande quantité sur toute la terre, dans les couches jurasiques et du crétacé supérieur.

5. Moyens selon la revendication 3, caractérisés en ce que le silicate de calcium est obtenu à partir de rhiolite, roches volcaniques vitreuses qui, après expansion due à la présence d'eau, par calcination et broyage, donne une matière appelée perlite expansée.

6. Moyens selon la revendication 3 ou la revendication 4, caractérisés en ce que le silicate de calcium est traité en autoclave en présence de chaux afin d'optimiser son activité superficielle.

7. Moyens selon la revendication 6 caractérisés en ce que le traitement en autoclave est réalisé sous une pression de 5 à 6 bar, à une température de l'ordre de 160° C et pendant environ 20 minutes.

8. Moyens selon l'une quelconque des revendications 4 à 7, caractérisés en ce que le corps adsorbant pulvérulent (4) possède une granulométrie telle que 95 % en poids de cette terre possède une granulométrie inférieure à 30 microns tandis que 66 % en poids possède une granulométrie comprise entre 20 et 30 microns, de sorte que le rayon équivalent de perméamétrie est de l'ordre de 100 Å.

9. Moyens selon l'une quelconque des revendications précédentes, caractérisés en ce que le corps adsorbant pulvérulent (4) est tassé à l'intérieur de l'enceinte (3) jusqu'à présenter une densité supérieure à 0,15 et, de préférence, supérieure à 0,20.

10. Moyens selon l'une quelconque des revendications 1 à 9, caractérisés en ce que le réducteur de pression (6) est déterminé de manière à abaisser la pression du gaz délivré par le corps adsorbant (4) dans l'enceinte (3) à la valeur d'utilisation de ce gaz.

11. Moyens selon l'une quelconque des revendications 1 à 10, caractérisés en ce que, lorsque l'enceinte est aménagée dans une cartouche amovible adaptable à l'un quelconque de plusieurs appareils fonctionnant à des pressions de gaz différentes, le réducteur de pression (6) est déterminé pour délivrer un flux de gaz sous une pression au moins égale à la valeur de pression de fonctionnement de l'appareil exigeant la pression la plus élevée, chaque appareil étant lui-même équipé d'un réducteur de pression complémentaire abaissant la pression du gaz à sa valeur de fonctionnement.

FIG.1

FIG.2

FIG.3

**Office européen**
**des brevets**

# RAPPORT DE RECHERCHE EUROPEENNE

Numero de la demande

EP    91 42 0230

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | DE-A-2 039 370 (CIBA-GEIGY)<br>* page 1, alinéa 1 *<br>* page 2, alinéa 3 *<br>* page 2, alinéa 7 - page 3, alinéa 1 *<br>* page 3, alinéa 3 - page 4, alinéa 2 *<br>* page 5, alinéa 5 - page 6, alinéa 4 *<br>* page 11, alinéa 3 - page 13, alinéa 1 *<br>* revendication 1; figures 1,2,6,7 *<br>--- | 1-3,8,9 | F17C11/00<br>F23Q2/16 |
| A | EP-A-0 264 550 (N.I.INDUSTRIES)<br>* abrégé *<br>* page 2, ligne 4 - ligne 26 *<br>* page 3, ligne 35 - ligne 39 *<br>* page 4, ligne 49 - page 5, ligne 27 *<br>--- | 1-3,6,8 | |
| A | EP-A-0 218 403 (CALGON CARBON CORPORATION)<br>* abrégé *<br>* page 3, ligne 28 - ligne 57 *<br>* revendication 1; exemple 23 *<br>--- | 1,2,8,9 | |
| A | EP-A-0 111 878 (W.KRÄMER)<br>* abrégé *<br>* page 15, alinéa 2 - page 16, alinéa 3 *<br>* page 20, alinéa 3 -alinéa 4 *<br>* page 37 *<br>* revendications 1,3,4,6 *<br>--- | 3,4,6 | **DOMAINES TECHNIQUES RECHERCHES (Int. Cl.5 )**<br><br>F17C<br>F23Q<br>B01J |
| A | FR-A-885 677 (M.QUERCIA ET AL.)<br>* le document en entier *<br><br>----- | 1,2 | |

Le présent rapport a été établi pour toutes les revendications

| Lieu de la recherche | Date d'achèvement de la recherche | Examinateur |
|---|---|---|
| LA HAYE | 08 NOVEMBRE 1991 | STEVNSBORG N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)